# EUROPEAN PATENT APPLICATION

(11) **EP 3 315 185 A1**
(43) Date of publication of application: **02.05.2018**
(21) Application number: 17197932.1
(22) Date of filing: 24.10.2017
(51) Int. Cl.: B01D 46/00, B01D 46/24, B01D 46/52, B01D 50/00

(54) **TUBULAR AIR CLEANER**

(30) Priority: 28.10.2016 JP 2016211763
(71) Applicant: Toyota Boshoku Kabushiki Kaisha, Kariya-shi, Aichi 448-8651 (JP)
(72) Inventor: ISHIZUKA, Satoshi, Kariya-shi,, Aichi 448-8651 (JP); MARUYAMA, Kazushige, Kariya-shi,, Aichi 448-8651 (JP)
(74) Representative: TBK

(57) **Abstract**

A tubular air cleaner includes a housing, which has a peripheral wall and a bottom wall, an inlet, which is formed in the peripheral wall, an outlet, which is formed in the bottom wall, a filter element, and a partition wall portion. The filter element has a filtration portion and is accommodated in the housing. The partition wall portion forms the inlet together with the peripheral wall. The filter element is arranged eccentrically with respect to the axis of the housing. An air flow path is formed between the filtration portion and the inner peripheral surfaces of the peripheral wall and the partition wall portion. The air flow path has a gradual change portion, in which the distance between the inner peripheral surface of the peripheral wall and the outer peripheral surface of the filtration portion gradually decreases toward the downstream end.

## Description

### BACKGROUND OF THE INVENTION

The present invention relates to a tubular air cleaner.

Conventionally, a tubular air cleaner (hereinafter referred to as an air cleaner) has a cylindrical housing and a filter element accommodated in the housing. The filter element has a cylindrical structure with a multi-pointed star-shaped outer configuration (for example, Japanese Laid-Open Patent Publication No. 61-255258).

The housing of the air cleaner described in the publication includes a peripheral wall, which has a cylindrical inlet projecting in a tangential direction of the peripheral wall. The housing also has a cylindrical outlet projecting from the bottom wall. The housing accommodates a guide plate for guiding the air flowing in through the inlet. The guide plate defines an air flow path such that the air flow path becomes closer to the periphery toward the downstream end and decreases the cross-sectional area of the air flow path toward the downstream end. Further, the guide plate covers part of the filtration portion that faces the opening of the inlet.

Such an air cleaner causes the air flowing into the housing through the inlet to swirl while accelerating the velocity of the air. Therefore, coarse dust particles contained in the air are separated by the centrifugal force. Since the guide plate is provided, air is less likely to directly strike the filtration portion immediately after flowing into the housing through the inlet.

In the air cleaner described in the publication, the guide plate blocks the air flow path formed between the inner peripheral surface of the peripheral wall and the outer peripheral surface of the filtration portion. Thus, the swirl flow of air strikes the back of the guide plate, which disturbs the air flow. This increases the pressure loss of the air. Therefore, there is room for improvement in reducing the air pressure loss.

### SUMMARY OF THE INVENTION

Accordingly, it is an objective of the present invention to provide a tubular air cleaner capable of reducing air pressure loss.

To achieve the foregoing objective and in accordance with one aspect of the present invention, a tubular air cleaner is provided that includes a cylindrical housing, which has a peripheral wall and a bottom wall, an inlet, which is formed in the peripheral wall, an outlet, which is formed in the bottom wall, a filter element, which has a cylindrical filtration portion and is accommodated in the housing, and a partition wall portion, which is provided in the housing and constitutes the inlet together with the peripheral wall. The filter element is arranged eccentrically with respect to an axis of the housing. An air flow path is formed over an entire circumference between the filtration portion and inner peripheral surfaces of the peripheral wall and the partition wall portion. The air flow path has a gradual change portion, in which a distance between the inner peripheral surface of the peripheral wall and an outer peripheral surface of the filtration portion gradually decreases toward a downstream end.

### BRIEF DESCRIPTION OF THE DRAWINGS

Fig. 1 is a perspective view of a tubular air cleaner according to one embodiment.
Fig. 2 is a side view of the air cleaner of the embodiment as viewed from the side corresponding to the inlet.
Fig. 3 is a front view of the air cleaner of the embodiment as viewed from the side corresponding to the outlet.
Fig. 4 is a plan view of the air cleaner of the embodiment.
Fig. 5 is an exploded perspective view of the air cleaner of the embodiment.
Fig. 6 is a cross-sectional view taken along line 6-6 of Fig. 4, showing the air cleaner.
Fig. 7 is a cross-sectional view taken along line 7-7 of Fig. 4, showing the air cleaner.

### DETAILED DESCRIPTION OF THE PREFERRED EMBODIMENTS

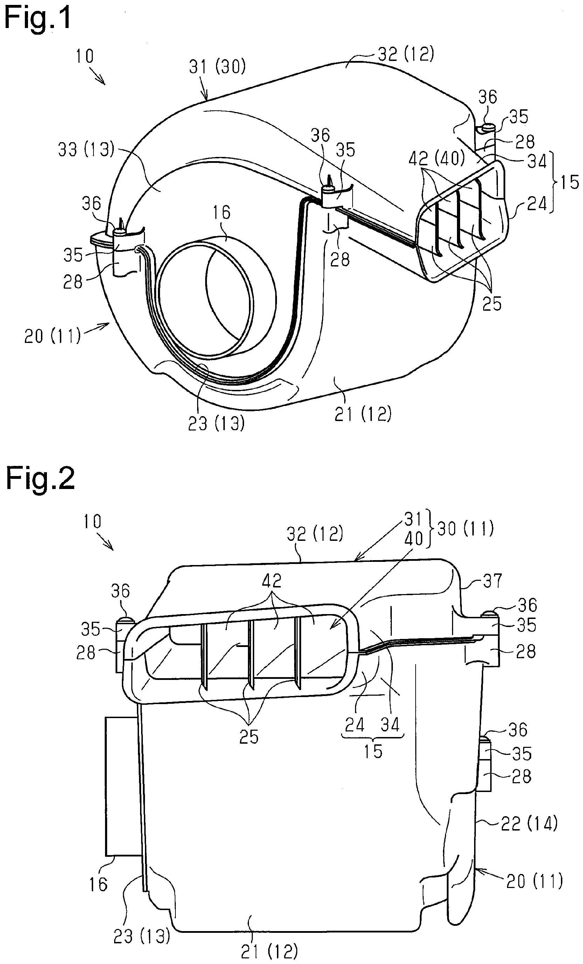

One embodiment will now be described with reference to Figs. 1 to 7.

A tubular air cleaner (hereinafter referred to as an air cleaner 10) is provided in the intake passage of an in-vehicle internal combustion engine. As shown in Figs. 1 to 7, the air cleaner 10 includes a cylindrical housing 11, which has a peripheral wall 12 and a bottom wall 13, and a multi-pointed star-shaped filter element 50, which is accommodated in the housing 11. An inlet 15 is formed in the peripheral wall 12. An outlet 16 is formed in the bottom wall 13.

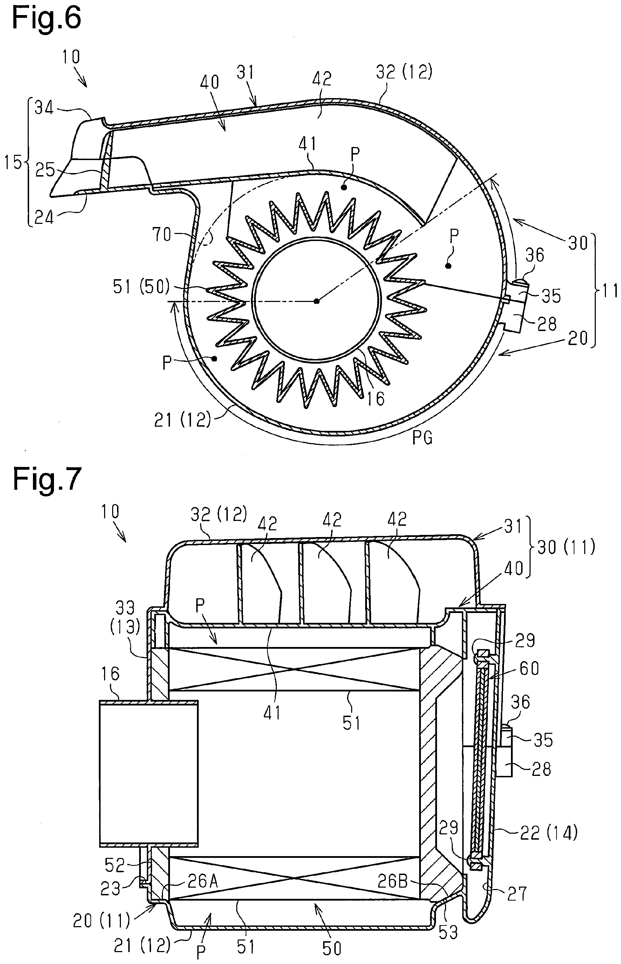

As shown in Fig. 6, the filter element 50 is arranged eccentrically with respect to the axis of the housing 11.

The components of the air cleaner 10 will now be described.

### <Filter Element 50>

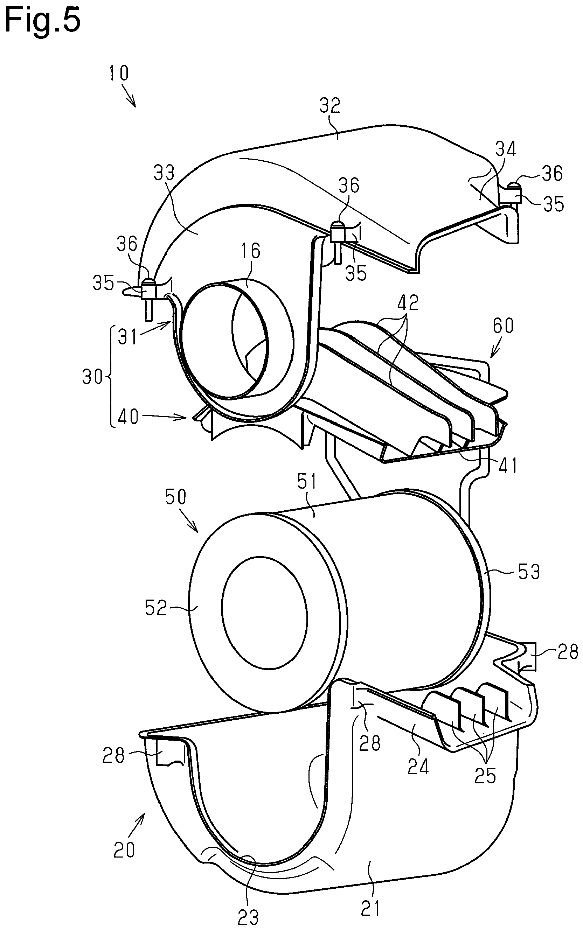

As shown in Figs. 5 to 7, the filter element 50 has a filtration portion 51, which is formed by pleating a filtering medium sheet of, for example, nonwoven fabric or filter paper and then making a cylindrical shape with the pleated sheet. The end of the filtration portion 51 closer to the outlet 16 will be referred to as a first end, and the end opposite to the first end will be referred to as a second end. The first end of the filtration portion 51 is provided with a substantially disk-shaped first sealing portion 52 having a center hole. The second end of the filtration portion 51 is provided with a substantially disk-shaped second sealing portion 53 having no center hole. Both the first sealing portion 52 and the second sealing portion 53 are made of closed-cell polyurethane. A cylindrical lattice-shaped frame member (not shown) for maintaining the shape of the filtration portion 51 may be integrally provided on the inner periphery of the filtration portion 51.

The housing 11 will now be described.

As shown in Figs. 1 to 3 and 5 to 7, the housing 11 includes a case 20 and a cap 30. Both of the case 20 and the cap 30 are made of a hard plastic material.

### <Case 20>

As shown in Figs. 1 to 3 and 5 to 7, the case 20 includes a case peripheral wall portion 21 and a case bottom wall portion 22. The case peripheral wall portion 21 is shaped like a curved plate and forms part of the peripheral wall 12 in the circumferential direction (mainly the lower part in Fig. 5). The case bottom wall portion 22 is shaped like a flat plate and faces the second sealing portion 53 of the filter element 50 (particularly, refer to Figs. 2 and 7).

As shown in Figs. 1, 3, and 5, the case 20 has a receiving wall portion 23 at the end opposite to the case bottom wall portion 22. The receiving wall portion 23 receives a cap bottom wall portion 33 of the cap 30, which will be discussed below. The receiving wall portion 23 has a substantially U-shaped cutout shape.

As shown in Figs. 1 to 3, 5, and 6, an inlet protrusion 24 is formed at one end of the case peripheral wall portion 21 in the circumferential direction. The inlet protrusion 24 protrudes radially outward. The inlet protrusion 24 has a substantially U-shaped cross section. Flow regulating fins 25 are provided on the inner surface of the inlet protrusion 24. The flow regulating fins 25 are spaced apart in the width direction (the lateral direction in Fig. 2) of the inlet protrusion 24. In the present embodiment, three flow regulating fins 25 are provided on the inner surface of the inlet protrusion 24.

As shown in Fig. 7, part of the inner peripheral surface of the case peripheral wall portion 21 that faces the first sealing portion 52 of the filter element 50 constitutes a supporting surface 26A, which supports the first sealing portion 52. The supporting surface 26A is located radially inward of a part of the inner peripheral surface of the case peripheral wall portion 21 that faces the filtration portion 51 in the radial direction. Part of the inner peripheral surface of the case peripheral wall portion 21 that faces the second sealing portion 53 of the filter element 50 constitutes a supporting surface 26B, which supports the second sealing portion 53. The supporting surface 26B is located radially inward of a part of the inner peripheral surface of the case peripheral wall portion 21 that faces the filtration portion 51 in the radial direction.

The case 20 has an accommodating portion 27 between the case bottom wall portion 22 and the supporting surface 26B, that is, between the case bottom wall portion 22 and the second sealing portion 53. The accommodating portion 27 is located on the dusty side. The accommodating portion 27 accommodates an adsorption filter 60 for adsorbing fuel vapor of the internal combustion engine such that the adsorption filter 60 faces the case bottom wall portion 22. The adsorption filter 60 is a known filter composed of activated carbon and a breathable sheet containing activated carbon. The adsorption filter 60 is attached to the case 20 via a plurality of projections 29 projecting from the case bottom wall portion 22.

The case 20 has fastening portions 28 at the edge. The fastening portions 28 have internal thread holes (not shown) and are spaced apart from each other.

### <Cap 30>

As shown in Figs. 1 to 7, the cap 30 includes a cap body 31, which has a curved plate-shaped cap peripheral wall portion 32 and a substantially flat plate-shaped cap bottom wall portion 33. The cap peripheral wall portion 32 forms part of the peripheral wall 12 in the circumferential direction (mainly the upper part in Fig. 5). The cap bottom wall portion 33 forms the bottom wall 13 (see Fig. 7).

In the present embodiment, the peripheral wall 12 of the housing 11 is constituted by the case peripheral wall portion 21 and the cap peripheral wall portion 32. The bottom wall 13 of the housing 11 is constituted by the cap bottom wall portion 33 and the receiving wall portion 23 of the case 20.

As shown in Fig. 7, the cap bottom wall portion 33 is provided with a cylindrical outlet 16 protruding inward and outward of the housing 11. The first sealing portion 52 of the filter element 50 is externally fitted to a portion of the outlet 16 protruding inward from the cap bottom wall portion 33. This presses the outer peripheral surface of the outlet 16 and the inner peripheral surface of the first sealing portion 52 against each other, so that the outlet 16 and the filter element 50 seal against each other.

As shown in Figs. 1 to 6, an inlet protrusion 34, which protrudes outward, is formed at one end of the cap peripheral wall portion 32 in the circumferential direction. The inlet protrusion 34 has a substantially U-shaped cross section. The inlet protrusion 34 of the cap 30 and the inlet protrusion 24 of the case 20 constitute a portion of the inlet 15 that is located outside the housing 11 and projects in the tangential direction of the peripheral wall 12.

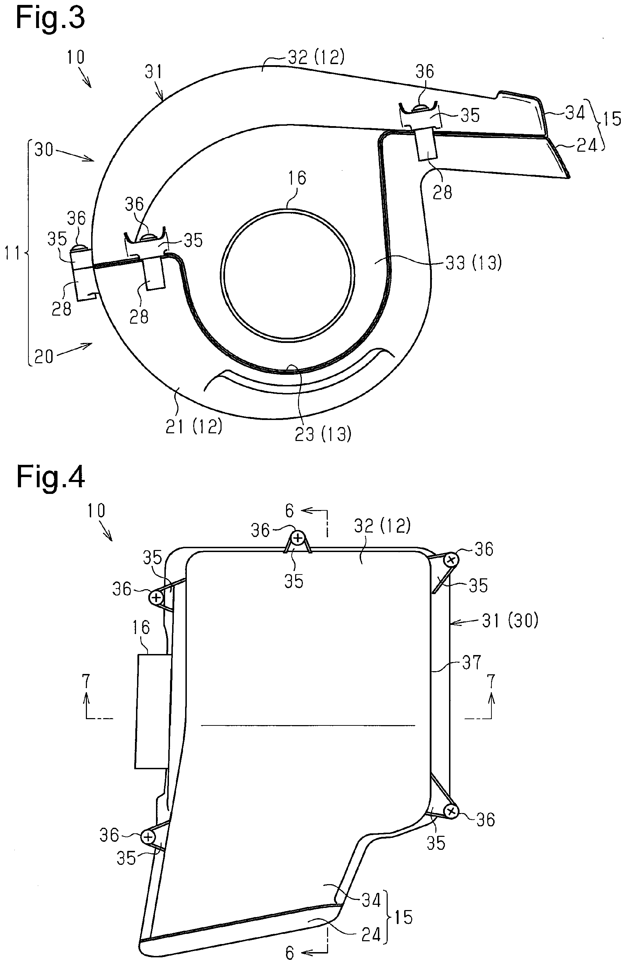

As shown in Figs. 2 and 4, the cap body 31 has a bottom wall forming portion 37 at the end opposite to the cap bottom wall portion 33. The bottom wall forming portion 37 constitutes the bottom wall 14 of the housing 11 together with the case bottom wall portion 22.

The cap body 31 has fastening portions 35 at positions on the edge corresponding to the fastening portions 28. Each fastening portion 35 has an insertion hole (not shown).

As shown in Figs. 5 to 7, an inlet forming member 40 is fixed to the cap body 31. The inlet forming member 40 has a partition wall portion 41 located inside the housing 11 and flow regulating fins 42 protruding from the surface of the partition wall portion 41 that faces the cap peripheral wall portion 32. The partition wall portion 41 forms the inlet 15 together with the cap peripheral wall portion 32 (the peripheral wall 12). The flow regulating fins 42 are respectively connected to the flow regulating fins 25 of the case 20. In the present embodiment, each flow regulating fin 42 extends to the downstream end of the partition wall portion 41, but the length in the extending direction of each flow regulating fin 42 may be changed as necessary. In the present embodiment, the inlet forming member 40 is joined to the cap body 31 by vibration-welding the edge of the cap body 31 and the edge of the partition wall portion 41 to each other.

As shown in Fig. 6, an air flow path P is formed over the entire circumference between the outer peripheral surface of the filtration portion 51 and the inner peripheral surfaces of the peripheral wall 12 and the partition wall portion 41. The air flow path P has a gradual change portion PG, in which the distance between the inner peripheral surface of the peripheral wall 12 and the outer peripheral surface of the filtration portion 51 gradually decreases toward the downstream end. The gradual change portion PG extends downstream from the inner opening of the inlet 15 in the housing 11.

As shown in Figs. 1 to 7, with the peripheral edges of the case 20 and the cap body 31 in contact with each other, screws 36 are inserted into the insertion holes of the fastening portions 35 of the cap body 31. The cap 30 is fastened to the case 20 by screwing the inserted screws 36 into the internal thread holes of the fastening portions 28 of the case 20.

The operation of the present embodiment will now be described.

As shown in Fig. 6, the air introduced into the housing 11 through the inlet 15 flows along the air flow path P. This causes the air to swirl along the peripheral wall 12 and gradually pass through the filtration portion 51. The air thus passes through a wide area of the filtration portion 51. In addition, since the air flow path P is formed over the entire circumference, the air flow is prevented from being disturbed as in the case of the air cleaner disclosed in Japanese Laid-Open Patent Publication No. 61-255258, in which the air flow path is blocked by the guide plate.

The distance between the inner peripheral surface of the partition wall portion 41 and the outer peripheral surface of the filtration portion 51 of the air flow path P is designed not to allow air to flow inside the housing 11 more than one revolution. Thus, the air introduced through the inlet 15 and the air that has turned one revolution inside the housing 11 are reliably prevented from striking with each other. Accordingly, the air flow is prevented from being disturbed.

The tubular air cleaner according to the above described embodiment has the following advantages.

(1) The partition wall portion 41, which constitutes the inlet 15 together with the peripheral wall 12, is provided in the housing 11. The filter element 50 is arranged eccentrically with respect to the axis of the housing 11. The air flow path P is formed over the entire circumference between the outer peripheral surface of the filtration portion 51 and the inner peripheral surfaces of the peripheral wall 12 and the partition wall portion 41. The air flow path P has the gradual change portion PG, in which the distance between the inner peripheral surface of the peripheral wall 12 and the outer peripheral surface of the filtration portion 51 gradually decreases toward the downstream end.

This configuration operates in the above described manner and thus reduces the air pressure loss.

(2) The housing 11 includes the case 20 and the cap 30. The case 20 has the case peripheral wall portion 21, which constitutes part of the peripheral wall 12 in the circumferential direction. The cap 30 includes the cap body 31 and the inlet forming member 40. The cap body 31 has the cap peripheral wall portion 32 and the cap bottom wall portion 33. The cap peripheral wall portion 32 constitutes part of the peripheral wall 12 in the circumferential direction. The part of the peripheral wall 12 constituted by the cap peripheral wall portion 32 is different from the part of the peripheral wall 12 constituted by the case peripheral wall portion 21. That is, the peripheral wall 12 has a first part in the circumferential direction that is constituted by the case peripheral wall portion 21 and a second part in the circumferential direction that is constituted by the cap peripheral wall portion 32. The cap bottom wall portion 33 forms the bottom wall 13. The inlet forming member 40 has the partition wall portion 41 and is fixed to the cap body 31 to form the inlet 15.

With this configuration, the housing 11 has a structure that is segmented into the case 20 and the cap 30. Furthermore, the cap 30 has a structure that is divided into the cap body 31 and the inlet forming member 40, which has the partition wall portion 41. Therefore, the cap body 31 and the inlet forming member 40 can be easily formed by molding plastic.

(3) The outlet 16 is formed in the bottom wall 13. The bottom wall 14 (the case bottom wall 22) is located on the side opposite to the bottom wall 13. The accommodating portion 27 is formed between the bottom wall 14 and the second sealing portion 53 of the filter element 50. The accommodating portion 27 accommodates the adsorption filter 60 for adsorbing fuel vapor. This limits increase in the air flow resistance by the adsorption filter 60, that is, increase in the pressure loss of air.

### <Modifications>

The above-described embodiment may be modified as follows.

The case 20 and the cap 30 may be fastened to each other with clamps.

The housing 11 may be divided into two housing members that can be brought close to and apart from each other in the axial direction of the filter element 50. In this case, the outlet and the inlet may be formed in one of the housing members. Alternatively, the outlet may be formed in one of the housing members, and the inlet may be formed in the other one of the housing members.

The airflow path P may be composed of the gradual change portion PG over the entire circumference. In this case, the shape of the partition wall portion 41 is changed such that the distance between the inner peripheral surface of the partition wall portion 41 and the outer peripheral surface of the filtration portion 51 gradually decreases toward the downstream end. Also, as indicated by the long dashed double-short dashed line in Fig. 6, a flow path wall 70 extends between the inner peripheral surface of the case peripheral wall portion 21 and the inner peripheral surface of the partition wall portion 41.

A tubular air cleaner includes a housing, which has a peripheral wall and a bottom wall, an inlet, which is formed in the peripheral wall, an outlet, which is formed in the bottom wall, a filter element, and a partition wall portion. The filter element has a filtration portion and is accommodated in the housing. The partition wall portion forms the inlet together with the peripheral wall. The filter element is arranged eccentrically with respect to the axis of the housing. An air flow path is formed between the filtration portion and the inner peripheral surfaces of the peripheral wall and the partition wall portion. The air flow path has a gradual change portion, in which the distance between the inner peripheral surface of the peripheral wall and the outer peripheral surface of the filtration portion gradually decreases toward the downstream end.

## Claims

1. A tubular air cleaner comprising:
a cylindrical housing (11), which has a peripheral wall (12) and a bottom wall (14);
an inlet (15), which is formed in the peripheral wall (12);
an outlet (16), which is formed in the bottom wall (14); and
a filter element (50), which has a cylindrical filtration portion (51) and is accommodated in the housing (11),
the tubular air cleaner being **characterized by** a partition wall portion (41), which is provided in the housing (11) and constitutes the inlet (15) together with the peripheral wall (12), wherein
the filter element (50) is arranged eccentrically with respect to an axis of the housing (11),
an air flow path (P) is formed over an entire circumference between the filtration portion (51) and inner peripheral surfaces of the peripheral wall (12) and the partition wall portion (41), and
the air flow path (P) has a gradual change portion (PG), in which a distance between the inner peripheral surface of the peripheral wall (12) and an outer peripheral surface of the filtration portion (51) gradually decreases toward a downstream end.

2. The tubular air cleaner according to claim 1, **characterized in that**
the housing (11) includes a case (20) and a cap (30),
the peripheral wall (12) includes a first part in a circumferential direction and a second part in the circumferential direction that is different from the first part,
the case (20) has a case peripheral wall portion (21), which constitutes the first part of the peripheral wall (12),
the cap (30) includes a cap body (31) and an inlet forming member (40),
the cap body (31) has a cap peripheral wall portion (32), which constitutes the second part of the peripheral wall (12), and a cap bottom wall portion (33), which forms the bottom wall (14), and
the inlet forming member (40) has the partition wall portion (41) and is fixed to the cap body (31) to form the inlet (15).
